# EUROPÄISCHE PATENTSCHRIFT

(11) **EP 1 072 397 B1**
(45) Veröffentlichungstag und Bekanntmachung des Hinweises auf die Patenterteilung: **25.01.2006**
(21) Anmeldenummer: 00115882.3
(22) Anmeldetag: 25.07.2000
(51) Int. Cl.: B32B 13/12, E04C 2/288, C04B 24/26

(54) **Aussenbauplatte bestehend aus einem Kern und wenigstens einer armierten Mörtelschicht**
Exterior building panel having a core and at least a reinforced mortar layer
Panneau de construction pour l'extérieur ayant un noyau et au moins une couche en mortier renforcée

(30) Priorität: 28.07.1999 DE 29913156 U
(43) Veröffentlichungstag der Anmeldung: 31.01.2001
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut

(56) Entgegenhaltungen:
- WO-A-98/17855
- US-A- 4 067 164
- US-A- 4 361 616

## Beschreibung

Die Erfindung betrifft eine Außenbauplatte, bestehend aus einer Kernschicht aus einer Schaumstoffplatte und aus einer auf wenigstens einer der Flachseiten der Kernschicht angeordneten, armierten Mörtelschicht, wobei die armierte Mörtelschicht aus einem ausgehärteten Mörtel besteht, in den ein Armierungsgewebe eingebettet ist und der aus einer Pulverkomponente aus Zement und Zuschlagstoffen mit einer beigemischten Kunststoff-Dispersion mit einem Gehalt an Butylacrylat-Styrol-Copolymer hergestellt ist.

Eine Bauplatte mit einer armierten Mörtelschicht ist aus der DE-A-4 234 269 bekannt. Sie besteht aus einer Kunststoffhartschaumplatte, die auf wenigstens einer Flachseite mit einer armierten Mörtelschicht beschichtet ist. In der Mörtelschicht ist ein Armierungsgewebe eingebettet. Diese Bauplatte hat sich bewährt. Kommt sie allerdings als Außenbauplatte zum Einsatz, saugen die Mörtelschichten Wasser auf, die zu Wasseransammlungen in der Beschichtung führen. Eintretender Frost und andere äußere Einflüsse führen zu einer Zerstörung der armierten Mörtelschicht und damit zur Beeinträchtigung der statischen, isolierenden und sonstigen Eigenschaften der Bauplatte.

Aus der DE-A-4 441 641 ist bekannt, auf wenigstens einer Seite des Hartschaumkerns gleich die Isolierschicht als wasserdichte Zweikomponenten-Abspachtelmasse aufzubringen, in die dann die Gewebelagen eingebettet werden. Nachteilig ist, daß die Zweikomponentenmasse solche verarbeitungseigenschaften hat, daß sie auf dem Hartschaumkern nur aufgespachtelt werden kann. In diese Masse läßt sich das Gewebe nur schwer und ungenau einlegen. Eine maschinelle Fertigung ist kaum möglich.

Aus der WO-A-9 817 855 ist eine Putztapete bekannt, die aus einem Vlies besteht, der mit einem Mörtel beschichtet und getränkt wird, der 40 bis 95 Gew.-% mineralische Stoffe und 5 bis 60 Gew.-% Kunststoffdispersion aufweist sowie eine Beimischung von Paraffin. Durch diese Mischung wird erreicht, daß der Mörtel nach dem Aushärten elastisch bleibt und sich die Putztapete wie eine übliche Tapete rollen läßt. Die Putztapete ist allerdings nicht für Außenanbringung bestimmt und geeignet.

Im DE-Prospekt der Firma Isoklinker von 01.1995, S. 1 bis 8, werden Platten aus dem Wärmedämmstoff Urethan angeboten, in dem rechteckige Wannen vorhanden sind, in die Klinker eingesetzt sind. Mit derartigen Platten kann ein Gebäude mit schadhafter Außenwand belegt werden. Nachteilig ist, daß die einzelnen Platten aufgrund der eingesetzten Klinker sehr schwer sind. Ein weiterer Nachteil ist, daß in die nebeneinander angebrachten Platten Feuchtigkeit eindringen kann, da die Klinker den Spaltbereich hauptsächlich nur aus optischen Gründen teilweise überdecken. Da für die Wandverkleidung eine Vielzahl von Platten zu verlegen sind, entstehen eine Vielzahl von Spalten, die so viel Feuchtigkeit eindringen lassen, daß die darunterliegende, bereits schadhafte Außenwand noch mehr gefährdet wird.

Eine Außenbauplatte gemäß eingangs zitiertem Oberbegriff ergibt sich aus der US-A-4 361 616. Die in dieser Schrift beschriebene Außenbauplatte ist aus einer Schaumstoffplatte mit Mörtelschicht und Armierungsgewebe aufgebaut. Auch der Gehalt an entsprechenden Stoffen der Mörtelschicht ist dieser Schrift zu entnehmen.

Es stellt sich die Aufgabe, eine Außenbauplatte der eingangs genannten Art so weiter zu entwickeln, daß sie nach dem Aushärten des Mörtels eine dichte Oberfläche erhält.

Erfindungsgemäß wird diese Aufgabe durch die Merkmale des Anspruchs 1 gelöst.

Überraschenderweise wurde nämlich gefunden, daß ein Mörtel mit Paraffinzusatz, wie er aus WO-8-9 817 855 für eine Putztapete zum Einsatz kommt, sich besonders für die Ausbildung der armierten Mörtelschicht für Außenbauplatten eignet. Der Kern kann mit der gleichen Anlage und nach dem gleichen Verfahren beschichtet werden wie die herkömmlichen Bauplatten. Hierdurch entstehen keine zusätzlichen Anlage- und Fertigungskosten. Die hohen Kunststoffanteile sorgen dafür, daß die Mörtelschichten kein Wasser aufnehmen, so daß es zu keinen Wasseransammlungen in der Beschichtung kommen kann, die zu deren Zerstörung führen kann.

Die Kernschicht kann ein Schaumstoffkern sein. Dem Schaumstoffkern sind Kerne aus anderen organischen/anorganischen Stoffen gleichzusetzen. So lassen sich beispielsweise Foamglas, lockeres oder geschäumtes, gepreßtes Recyclingmaterial, Polyurethanschaum, festere Mischwerkstoffe, Holzbindewerkstoffe, Mineralfasern, geschnitzelte und gehäckselte Abfallstoffe und dergleichen einsetzen.

Die Kunststoffdispersion kann dabei im wesentlichen aus zwei Komponenten bestehen. Die eine Komponente kann eine Dichtigkeitskomponente sein, die 10 bis 45 Gew.-%, vorzugsweise 22 Gew.-% der gesamten Masse des Mörtels einnimmt. Diese Dichtigkeitskomponente enthält wenigstens 80 bis 90 Gew.-% Dispersion eines Copolymers aus Butylacrylat und Styrol, vorzugsweise 57 %ig in Wasser und 0,5 bis 2 % Paraffindispersion, vorzugsweise 30 %ig in Wasser, auf. Die zweite Komponente kann 3 bis 4 Gew.-%, vorzugsweise 3,7 Gew.-% am gesamten Gewicht des Mörtels betragen. Die eingesetzte Paraffinkomponente macht nach dem Aushärten den Mörtel besonders dicht und dehnbar. Hierdurch ist es möglich, die fertiggestellte Bauplatte als Balkonbauplatte einzusetzen, die allseitig wasserabweisend ist. Die eingesetzte Kunststoffhartschaumplatte, die unterschiedlich dick sein kann, weist Poren auf, die jeweils in sich abgeschlossen sind und keine Verbindungen zum Inneren der Kunststoffhartschaumplatte aufweisen, so daß eine Wasseraufnahme des Kerns ausgeschlossen ist. Die Kunststoffhartschaumplatte kann eine Dicke zwischen 10 und 100 mm, vorzugsweise 20 mm haben. Die Beschichtung kann dabei vorzugsweise eine Dicke von 0,5 mm aufweisen. Sollten es bestimmte Einsatzbedingungen erforderlich machen, kann die Dicke der Beschichtung bis zur Dicke des Armierungsgewebes reduziert und bis zu 2 mm erhöht werden.

Diesen Komponenten können hinzugefügt werden:
Reaktionsverzögerer, Abbindebeschleuniger, Verdickungsmittel, Schaumbinder, in Anteilen, wie in Anspruch 2 genannt.

Das Armierungsgewebe kann von einer endlosen Bahn im praktisch spannungslosen Zustand in dem flüssigen Mörtel eingebettet werden. Das spannungslose Einbetten sichert, daß die Balkonbauplatte ebenso wie die Bauplatte nicht verformt wird.

Als Armierungsgewebe können unterschiedlichste Gewebe eingesetzt werden. Sie können als Glasfasergewebe oder -vliese, Aramid- oder Polyestervliese ausgebildet sein.

Die Flachseiten der Kunststoffhartschaumplatte können auf beiden Seiten beschichtet werden. Hierdurch erhält die Balkonbauplatte über die neuen wasserabweisenden Eigenschaften hinaus wärmeisolierende, schallisolierende und dergleichen Eigenschaften.

Bei Verwendung der Außenbauplatte entfallen sämtliche isolierenden Unter- und Oberaufbauten. Die Außenbauplatte kann sofort auf einem Balkon- oder Terassenunterbau aufgelegt werden. Hierbei sind selbstverständliche die geltenden DIN-Vorschriften einzuhalten. Insbesondere für die Sanierung von Altbalkonen und Altterassen ist die Verwendung der Außenbauplatten von Bedeutung. Die Außenbauplatten ersetzen die Unter- und Oberisolierung und schaffen zugleich eine wirksame Isolierung gegenüber dem zu sanierenden Untergrund. Ist die Außenbauplatte auf den zu sanierenden Untergrund aufgeklebt, kann sie für die weiteren Verfliesungsarbeiten sofort betreten werden.

Ebenso können schadhafte Außenwände von Gebäuden und dergleichen mit den Außenplatten belegt werden. Ein aufwendiges Vorverputzen und Vorisolieren kann hier entfallen. Die Außenbauplatte übernimmt durch ihre beiden armierten Mörtelschichten diese Funktion. Der Hartschaumkern isoliert die Außenwände sehr wirksam. Durch die Wahl der Dicke des Hartschaumkerns kann die Isolation entsprechend festgelegt werden. Die Außenbauplatten sind aufgrund des Schaumstoffkerns sehr leicht. Hierdurch ist es möglich, die Platten so groß herzustellen, daß sie die defekten Wandflächen großflächig überdeckt. Auf die äußere armierte Mörtelschicht können Ziegelriemchenkörper auch geklebt werden. Diese Ziegelriemchenkörper werden ebenfalls als großflächige Platten angeboten. Den Ziegelriemchenkörpern gleichzusetzen ist eine Belegung der Außenbauplatten mit Schieferplatten oder ein Außenverputz. Welche Außenverkleidung verwendet wird, hängt von der jeweiligen Gegend und den dort herrschenden Bedingungen ab.

Die Außenbauplatte kann auch als Winkelhalbzeug verwendet werden, indem in die Platte eine V-förmige Nut eingefräst und die sich ergebenden beiden Winkelplatten nach dem Zusammenklappen an dem sich ergebenden Gehrungsschnitt wenigstens teilweise mit einem Klebstoff verklebt werden.

Das Winkelhalbzeug kann darüber hinaus zur Sanierung von Außentreppen verwendet werden. Hierbei wird das Außenwinkelhalbzeug mit einer Flachseite der beiden Winkelplatten auf die schadhaften Außentreppen aufgesetzt. Dadurch, daß im Gehrungsschnitt beide Winkelplatten nicht durchgängig verklebt werden, ist es möglich, die Feuchtigkeit, die sich unterhalb der Belagplatten bilden kann, gezielt abzuleiten.

Die Erfindung ist in der Zeichnung dargestellt und wird im folgenden näher beschrieben. Es zeigen
- Fig. 1a: einen Ausschnitt eines Balkonaufbaus in einem vergrößerten Teilquerschnitt,
- Fig. 1b: eine Gebäudesanierung in einer schematischen, perspektivischen Teildarstellung,
- Fig. 1c und 1d: eine Treppensanierung in einer schematischen, perspektivischen Teildarstellung,
- Fig. 2: eine Balkonbauplatte für einen Balkonaufbau gemäß Fig. 1 in einer teilweisen schematischen perspektivischen Darstellung,
- Fig. 3: eine Bauplatte gemäß Fig. 2 in einer Explosionsdarstellung und
- Fig. 4: eine aus einer Bauplatte gemäß Fig. 2 und 3 hergestellten Außenwinkelhalbzeug in einer schematischen, perspektivischen Teildarstellung.

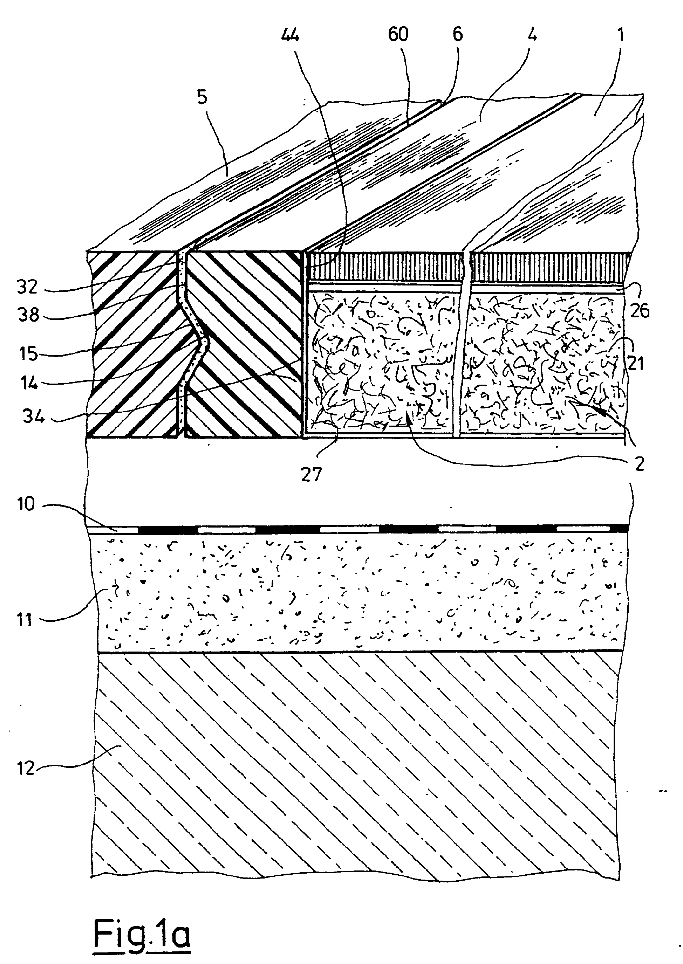

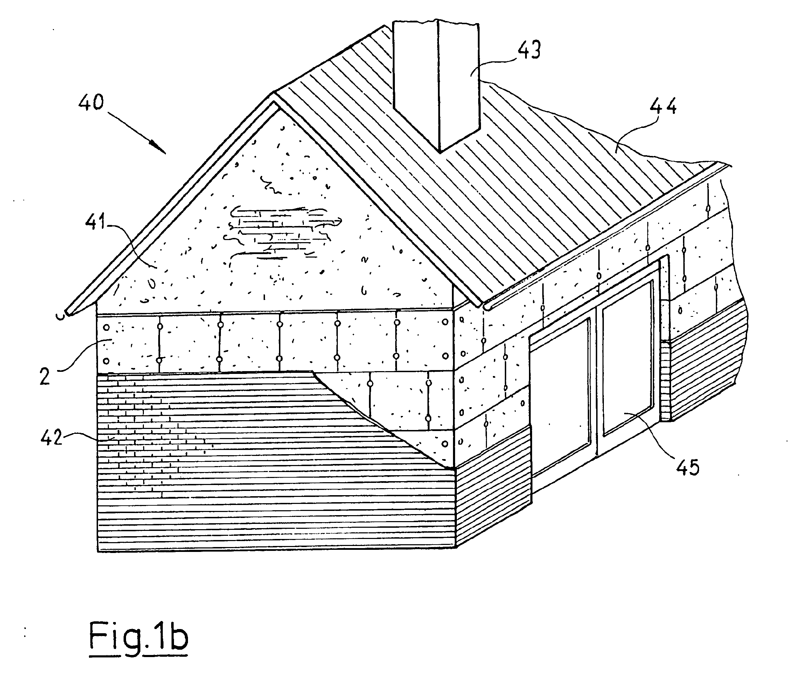

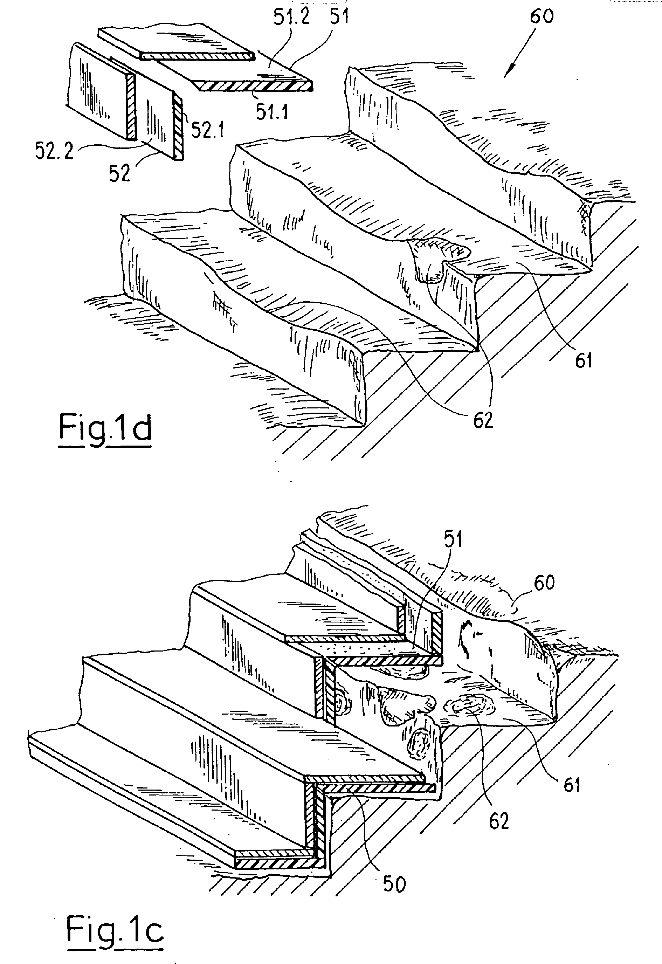

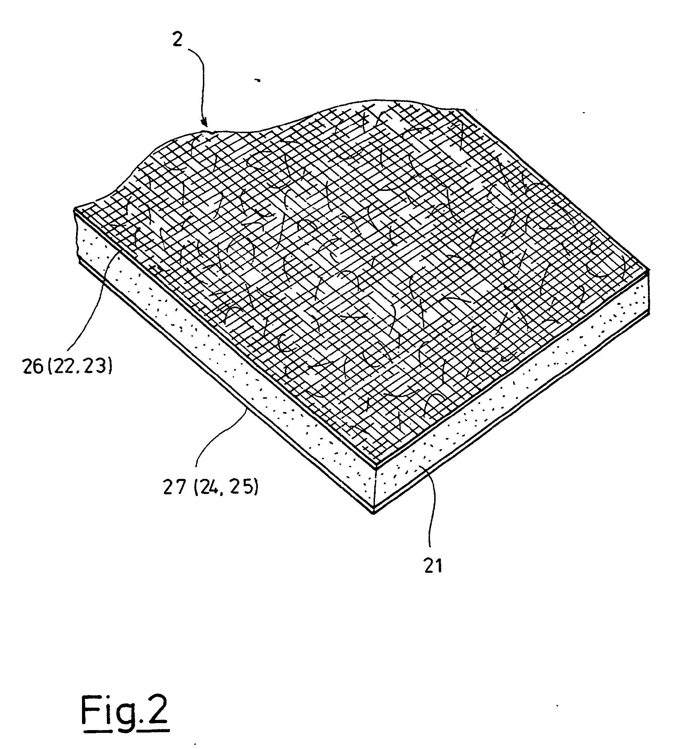

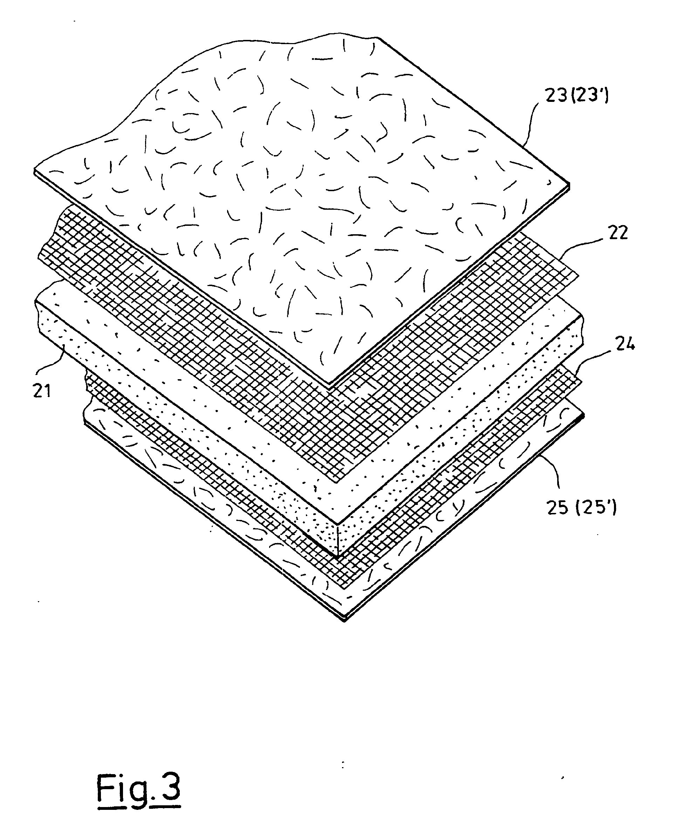

In Fig. 1a und 1b ist eine Außenbauplatte 2 gezeigt, die in einem Balkonaufbau und einer Gebäudesanierung eingesetzt ist. Die Außenbauplatte 2 ist einzeln in den Fig. 2 und 3 gezeigt.

Sie umfasst eine Kernschicht aus einer Kunststoffhartschaumplatte 21, die eine Dicke bis zu 100 mm, vorzugsweise 20 mm aufweist. Die Kunststoffhartschaumplatte 21 verleiht der Außenbauplatte 2 insbesondere die wärme- und schallisolierenden Eigenschaften. Wie insbesondere Fig. 3 zeigt, wird auf den beiden Flachseiten der Kunststoffhartschaumplatte 21 jeweils eine Mörtelschicht 23, 25 aus einem Mörtel 23' bzw. 25' aufgetragen.

Im fluiden Zustand hat der Mörtel 23', 25' folgende Zusammensetzung:
a) 50 bis 90 % Gew.-% Pulverkomponente aus feinstkörnigem Zement und feinstkörnigen Zuschlagstoffen und
b) 10 bis 50 Gew.-% Kunststoffdispersion.

Die Kunststoffdispersion enthält im fluiden Zustand maximal 60 Gew.-% Wasser oder eine andere geeignete Flüssigkeit.

Die Kunststoffdispersion enthält 10 bis 45 Gew.-% eine oder mehrere Dichtigkeits- und Wasserabweisungskomponenten, welche vorzugsweise eine Dispersion mit 80 bis 90 Gew.-% eines Copolymers aus Butylacrylat oder Styrol in Wasser ist, vermischt mit 0,5 bis 2 % Paraffindispersion mit einem Paraffinanteil von 20 bis 50 Gew.-% in Wasser und 1 bis 15 Gew.-% Wasser.

Die Pulverkomponente ist wie folgt zusammengesetzt:

| Volumenanteile: (in Vol.-%) | Komponenten: |
|---|---|
| 40 - 95 | hydraulisches Bindemittel |
| 0 - 50 | latent hydraulisches Bindemittel |
| 0 - 20 | Füllstoff |
| 0,1 - 5 | Silikat |
| 0 - 10 | Dispersionspulver |
| 0 - 5 | Verflüssiger |
| 0 - 3 | Stabilisator. |

Der Pulverkomponente des Mörtels 23', 25' werden hinzugefügt:

| Volumenanteile: (in Vol.-%) | Komponenten: |
|---|---|
| 0 - 5 | Reaktionsverzögerer |
| 0 - 5 | Abbindebeschleuniger |
| 0 - 3 | Verdickungsmittel |
| 0 - 5 | Schaumbinder |

In den Mörtel 23', 25' der beschriebenen Zusammensetzung wird ein Armierungsgewebe 22 bzw. 24 eingebettet. Hierbei wird das Armierungsgewebe 22, 24 von einer Rolle als endlose Bahn im praktisch spannungslosen Zustand auf die Mörtelschicht 23, 25 aufgelegt und in den noch fluiden Mörtel 23,', 25' eingedrückt. Überflüssiger Mörtel wird abgezogen, so daß eine armierte fluide Mörtelschicht in einer Stärke von etwa 0,5 mm entsteht.

Die so beschichtete Außenbauplatte wird in einen Trockenofen geschoben. In dem Trockenofen härtet der Mörtel 23', 25' aus, so daß die armierten Mörtelschichten 26, 27 entstehen.

Diese Außenbauplatte 2 wird bei dem in Fig. 1 gezeigten Balkonaufbau wie folgt eingesetzt:

Auf einer Betonrohplatte 12 wird ein Gefälleestrich 11 aufgetragen. Anschließend wird auf den Gefälleestrich eine Abklebeschicht 10 aufgeklebt. Danach werden auf die Aufklebeschicht Distanzelemente oder eine andere Schicht aufgelegt. Hierauf wird die Außenbauplatte 2 mit ihrer armierten Mörtelschicht 27 angeordnet.

Umgeben wird die Außenbauplatte mit einer Umrandung, die aus einem Innenrandkörper 4 und einem sich daran anschließenden Außenrandkörper 5 besteht. Zwischen dem Außenrandkörper 4 und dem Innenrandkörper 5 befindet sich eine Fuge 6.

Der Innenrandkörper 5 weist zur Außenbauplatte 2 hinzeigend eine geneigte Randkörperdrainagebegrenzungsfläche 34 auf. Der Randkörperdrainagebegrenzungsfläche 34 liegt ein Randkörperfugenflächenelement 32 gegenüber. Das Randkörperfugenflächenelement weist eine im wesentlichen teilweise gerade durchgehende Körpernut 14 auf. Dem Innenrandkörper liegt bei einer Verlegung der Außenrandkörper 5 der benachbarten Außenbauplatte gegenüber, der ein Randkörperfugenelement 33 aufweist, auf dem eine Randkörperfeder gerade und durchgängig ausgebildet ist. Kompatibel zueinander sind die Randkörpernut 14 und die Randkörperfeder sowie die beiden sich gegenüberliegenden Randkörperfugenelemente 24 und 25. Durch diese Fugenabdichtungselemente entsteht die bereits erwähnte Fuge 6, die zum einen die beiden Randkörper 4 und 5 mechanisch miteinander verbindet und zum anderen einen wirksamen Schutz gegen Schmutz und dergleichen darstellt.

Auf der armierten Mörtelschicht 27 werden auf bekannte Art und Weise Fliesenkörper 1 verlegt. Der Innenrandkörper 4 und der Außenrandkörper 5 ist so hoch gezogen, daß er in einer ebene mit den Fliesenkörpern 1 liegt. Der Innenrandkörper 4 beschicht 10 aufgeklebt. Danach werden auf die Aufklebeschicht Distanzelemente oder eine andere Schicht aufgelegt. Hierauf wird die Außenbauplatte 2 mit ihrer armierten Mörtelschicht 27 angeordnet.

Umgeben wird die Außenbauplatte mit einer Umrandung, die aus einem Innenrandkörper 4 und einem sich daran anschließenden Außenrandkörper 5 besteht. Zwischen dem Außenrandkörper 4 und dem Innenrandkörper 5 befindet sich eine Fuge 6.

Der Innenrandkörper 5 weist zur Außenbauplatte 2 hinzeigend eine geneigte Randkörperdrainagebegrenzungsfläche 34 auf. Der Randkörperdrainagebegrenzungsfläche 34 liegt ein Randkörperfugenflächenelement 32 gegenüber. Das Randkörperfugenflächenelement weist eine im wesentlichen teilweise gerade durchgehende Körpernut 14 auf. Dem Innenrandkörper liegt bei einer Verlegung der Außenrandkörper 5 der benachbarten Außenbauplatte gegenüber, der ein Randkörperfugenelement 33 aufweist, auf dem eine Randkörperfeder gerade und durchgängig ausgebildet ist. Kompatibel zueinander sind die Randkörpernut 14 und die Randkörperfeder sowie die beiden sich gegenüberliegenden Randkörperfugenelemente 24 und 25. Durch diese Fugenabdichtungselemente entsteht die bereits erwähnte Fuge 6, die zum einen die beiden Randkörper 4 und 5 mechanisch miteinander verbindet und zum anderen einen wirksamen Schutz gegen Schmutz und dergleichen darstellt.

Auf der armierten Mörtelschicht 27 werden auf bekannte Art und Weise Fliesenkörper 1 verlegt. Der Innenrandkörper 4 und der Außenrandkörper 5 ist so hoch gezogen, daß er in einer ebene mit den Fliesenkörpern 1 liegt. Der Innenrandkörper 4 weist dabei gegenüber dem Fliesenelement eine gerade durchgehende Randkörpereinfassungsfläche 44 auf.

Der Balkonaufbau kann dabei nicht nur wie beschrieben, ein Neuaufbau, sondern auch ein Sanierungsaufbau sein. Hierbei wird in ähnlicher Art und Weise die Außenbauplatte auf den vorhandenen Untergrund, der mit einer Zwischenschicht oder dergleichen endet, aufgelegt. Auf die Auf- und Ausbauplatten werden Fliesenkörper 1 in herkömmlicher Art und Weise verlegt. Die Konstruktion kann dabei mit einer Umrandung, die bereits beschrieben aus Innenrandkörpern 4 und Außenrandkörpern 5 besteht, umrandet werden. Auch andere Umrandungen sind einsetzbar. Die Außenbauplatten lassen es zu, daß auch bestehende Balkonumrandungen weiter Verwendung finden können.

Von besonderem Vorteil ist, daß durch die spezielle Zusammensetzung des Mörtels 23', 25', der über einen hohen Kunststoffanteil verfügt, die Mörtelschichten 23, 25 zu wasserdichten und -abweisenden Mörtelschichten 23, 25 werden. Trifft Flüssigkeit als Spritz- oder Regenwasser oder dergleichen auf die Fliesen auf und diffundiert durch diese in Richtung auf die Außenbauplatten 2 durch, verhindern die wasserdichten Mörtelschichten 23, 25 das Eindringen des Wassers in diese Schichten. Hierdurch können sich keine Wasseransammlungen bilden, die z. B. bei plötzlichem Frost zu einer Zerstörung der Mörtelschicht führen. Hierdurch behält die Außenbauplatte 2 insbesondere ihre statischen Eigenschaften.

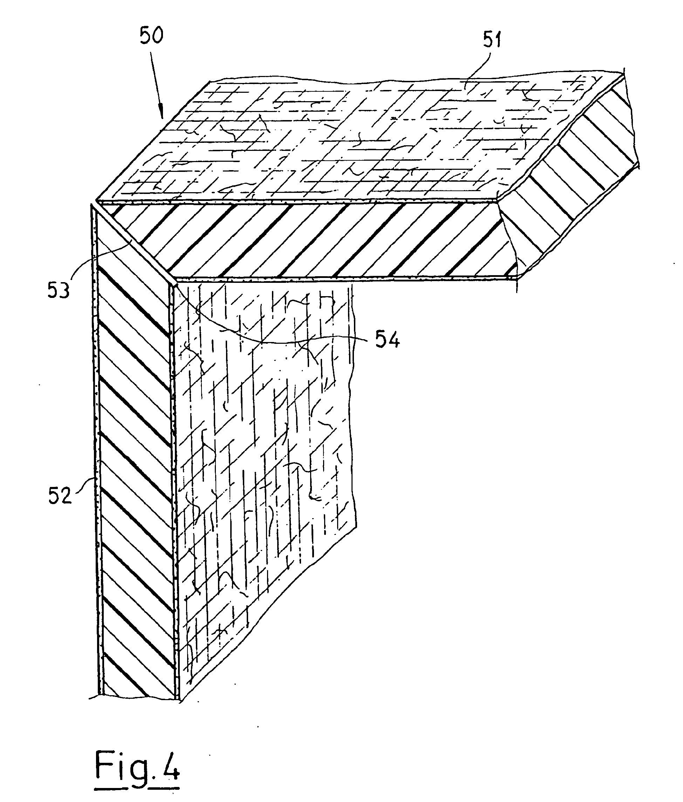

Aus den Außenbauplatten gemäß Fig. 2 und 3 läßt sich ein Außenwinkelhalbzeug 50 herstellen, wie es in Fig. 4 gezeigt ist. Hierbei wird in die Außenbauplatte 2 eine V-förmige Nut bis zu dem Armierungsgewebe 22, 24 eingebracht, ohne dieses zu durchtrennen. Durch das Setzen der V-Nut entstehen unterschiedlich breite Winkelplatten 51, 52. Von Vorteil ist hierbei, daß das aus der DE-A-4 236 470 A1 bekannte Verfahren zum Einsatz kommen kann. Auf den bereits vorhandenen Anlagen kann die Außenbauplatte ebenso wie die herkömmliche Bauplatte entsprechend bearbeitet werden.

Nachdem die V-förmige Nut eingebracht ist, wird eine der beiden Winkelplatten aufgerichtet und an einem entstehenden Gehrungsschnitt 53 wenigstens teilweise ein Klebstoff 54 aufgebracht. Hierdurch wird gesichert, daß die beiden Winkelplatten zusammenhalten. Es ist auch möglich, wenigstens teilweise in die Nut den Klebstoff einzubringen. Möglich ist es natürlich auch, den Klebstoff durchgängig aufzutragen. Durch das abschnitts- oder punktweise Verkleben beider Winkelplatten 51, 52 im Gehrungsschnitt 53 wird ganz bewußt auf eine im wesentlichen flüssigkeitsdichte Verklebung beider Winkelplatten verzichtet, worauf im weiteren noch eingegangen wird.

Die Außenbauplatten 12 werden, wie Fig. 1b zeigt, zum Sanieren von schadhaften Gebäudeaußenwänden 41 eines Gebäudes 40 eingesetzt. Die Schadstellen sind in der gezeigten Gebäudewand 41 im Giebelbereich, über den ein Dach 44 mit einem Schornstein 43 liegt, verwendet.

Auf die schadhaften Gebäudeaußenwände 41 werden die Außenbauplatten 42 aufgebracht. Sie können aufgeklebt oder aufgenagelt werden. Hierdurch entfällt ein aufwendiges Entfernen des schadhaften Außenputzes bzw. ein Ausbessern der schadhaften Stellen mit entsprechender Außenisolierung. Desweiteren entfällt ein zusätzliches Wärmeabisolieren mit einzelnen Wärmematten und dergleichen. Dadurch, daß sich die einzelnen Außenbauplatten leicht mit einer Säge bearbeiten lassen, können Wandausnehmungen, wie z. B. ein Balkonfenster 45, das auch als Balkontür genutzt werden kann, leicht umkleidet werden. Die geometrische Form des Fensters oder der Tür ist dabei von untergeordneter Bedeutung.

Auf die aufgebrachten Außenbauplatten 2 werden, wie Fig. 1b weiterhin zeigt, Ziegelriemchenkörper 42 aufgesetzt. Selbstverständlich sind auch andere Außenverkleidungen auf die Außenbauplatten aufsetzbar. Die Außenbeschichtung wird durch Bauordnungen in den einzelnen Gegenden geregelt. So können anstelle der Ziegelriemchenkörper Schieferplatten, herkömmlicher Putz, Stuck oder dergleichen aufgetragen werden.

Von besonderem Vorteil ist, daß durch die Außenbauplatten 2 sowohl die Wärmedämmung als auch das äußere Aussehen der schadhaften Außenwände wirksam verbessert wird. Dadurch, daß die Außenbauplatten wegen des Schaumstoffkerns relativ leicht sind, nimmt die Gebäudestatik die relativ geringe Belastung sicher auf.

In Fig. 1b ist gezeigt, daß die Gebäudeaußenwände 41 nur mit Außenbauplatten 2 verkleidet werden. Die Wandecken können auch mit dem Außenwinkelhalbzeug 50 verkleidet werden. Mit Hilfe der Säge können die Außenwinkelhalbzeuge 50 auf die entsprechende Länge geschnitten und auf der Ecke aufgebracht werden.

Eine weitere Verwendung finden die Winkelhalbzeuge 50 für die Verkleidung von Außentreppen 60, wie sie in den Fig. 1c und 1d gezeigt sind.

Bei der Außentreppe 1d sind die abgetretenen Ecken und die Ausbrüche in schadhaften Treppenstufen 61 mit 62 bezeichnet.

Anstelle nun eine neue Treppe aufzubauen, werden auf die schadhaften Treppenstufen 61 übereinander Außenwinkelhalbzeuge 50 gesetzt. Hierbei liegen mit 51.1 und 52.1 bezeichnete Flachseiten der Winkelplatten 51 und 52 auf den Treppenstufen 61 auf. Die Winkelplatten überbrücken dabei die schadhaften Stellen 61 nicht nur optisch, sondern auch statisch.

Sind die Außenwinkelhalbzeuge 50 nacheinander auf die Treppenstufen der Außentreppe 60 aufgebracht, kann auf einer mit 51.2 und 52.2 bezeichneten Flachseite der Winkelplatten 51, 52 Belagplatten 63 aufgebracht werden. Die Belagplatten können Marmorplatten, Steinplatten, Ziegelverkleidungen, Terrazzoplatten und dergleichen sein.

Beim Einsatz des Außenwinkelhalbzeugs 50 für die Sanierung von schadhaften Außentreppen kommt ihr vorteilhaft die teilweise Nichtverklebung der beiden Winkelplatten im Gehrungsschnitt 53 zum Einsatz. Hierdurch wird gewährleistet, daß entstehende Feuchtigkeit entweder gezielt über die Treppenstufen in ein geschaffenes Flüssigkeitsleitsystem abgeleitet werden. Ist dieses Flüssigkeitsleitsystem nicht vorhanden, kann die Durchlässigkeit im Gehrungsschnitt dafür sorgen, daß verdunstende Flüssigkeit durch den Fugen des Belagplattenmörtels hindurch nach außen treten kann. In beiden Fällen werden Flüssigkeitsansammlungen zwischen der Treppenstufe 61 und der darüberliegenden Verkleidung, bestehend aus Außenwinkelhalbzeug und Belagplatten verhindert.

Dadurch, daß die armierte Mörtelschicht keine Flüssigkeit aufnimmt, wird wirksam deren Zerstören durch Zerfrieren und dergleichen verhindert. Der Schaumstoffkern sorgt zusammen mit den beiden armierten Mörtelschichten für die statische Stabilität das Außenwinkelhalbzeugs. Die Kunststoffhartschaumplatte als Kern des Außenwinkelhalbzeugs dämpft die Schrittgeräusche beim Betreten der sanierten Außentreppe.

Zusammenfassend ist festzustellen, daß durch die Verwendung des Putztapetenmörtels eine Außenbauplatte zur Verfügung steht, die den Aufbau und die Sanierung von Objekten, die äußeren Witterungseinflüssen, insbesondere Regen, ausgesetzt sind, vereinfacht und revolutioniert.

## Patentansprüche

1. Außenbauplatte, bestehend aus einer Kernschicht (21) aus einer Schaumstoffplatte und aus einer auf wenigstens einer der Flachseiten der Kernschicht angeordneten, armierten Mörtelschicht (26, 27), wobei die armierte Mörtelschicht (26, 27) aus einem ausgehärteten Mörtel (23', 25') besteht, in den ein Armierungsgewebe (22, 24) eingebettet ist und der aus einer Pulverkomponente aus Zement und Zuschlagstoffen mit einer beigemischten Kunststoff-Dispersion mit einem Gehalt an Butylacrylat-StyrolCopolymer hergestellt ist,
**dadurch gekennzeichnet, dass** der Mörtel (23', 25') im nicht abgebundenen Zustand folgende Zusammensetzung hat:
- 50 bis 90 Gew.-% Pulverkomponente aus feinstkörnigen Zement und feinstkörnigen Zuschlagstoffen
- und 10 bis 50 Gew.-% einer Kunststoffdispersion, letztere enthaltend maximal 60 Gew.-% Wasser, wobei der dispergierte Kunststoff zu 80 bis 90 Gew.-% aus einem Copolymer aus Butylacrylat und Styrol besteht,
- vermischt mit 0,5 bis 2 % Paraffindispersion mit einem Paraffinanteil von 20 bis 50 Gew.-% in Wasser
- und 1 bis 15 Gew.-% Wasser.

2. Außenbauplatte nach Anspruch 1, **dadurch gekennzeichnet, dass** der Pulverkomponente des Mörtels (23', 25') hinzugefügt ist:
| Volumenanteile: (in Vol.-%) | Komponenten: |
|---|---|
| 0 - 5 | Reaktionsverzögerer |
| 0 - 5 | Abbindebeschleuniger |
| 0 - 3 | Verdickungsmittel |
| 0 - 5 | Schaumbinder |

3. Außenbauplatte nach Anspruch 1 oder 2, **dadurch gekennzeichnet, dass** das Armierungsgewebe (22, 24) von einer endlosen Bahn im praktisch spannungslosen Zustand eingebettet ist.

4. Außenbauplatte nach Anspruch 3, **dadurch gekennzeichnet, dass** das Armierungsgewebe (22, 24) ein Glasfasergewebe oder -vlies, ein Aramid oder Polyestervlies ist.

5. Außenbauplatte nach Anspruch 1, **dadurch gekennzeichnet, dass** die Kernschicht eine Kunststoffhartschaumplatte (2) ist.

6. Außenbauplatte nach Anspruch 1 bis 5, **dadurch gekennzeichnet, dass** beide Flachseiten der Kunststoffhartschaumplatte (2) beschichtet sind.

7. Außenbauplatte nach Anspruch 1 bis 6, **dadurch gekennzeichnet, dass** die Kunststoffhartschaumplatte (2) 10 bis 100 mm dick ist.

## Claims

1. External building board comprising a core layer (21) made up of a foam panel and a reinforced mortar layer (26, 27) arranged on at least one of the flat sides of the core layer wherein the reinforced mortar layer (26, 27) consists of a hardened mortar (23' - 25'), into which a reinforcing fabric (22, 24) is embedded and which is produced from a powder component of cement and aggregates with a plastic dispersion mixed in with a butyl acrylate styrene copolymer content,
**characterised in that** the mortar (23', 25') has the following composition in the non-hardened state:
- 50 to 90% by weight of powder component of finest grain cement and finest grain aggregates
- and 10 to 50% by weight of a plastic dispersion, the latter containing a maximum of 60% by weight of water wherein the deflocculated plastic comprises 80 to 90% by weight of a copolymer made up of butyl acrylate and styrene,
- mixed with 0.5 to 2% paraffin dispersion with a paraffin part of 20 to 50% by weight in water
- and 1 to 15% by weight of water.

2. External building board according to claim 1,
**characterised in that** the following are added to the powder component of the mortar (23', 25') :
| Volume parts: (in % by vol.) | Components: |
|---|---|
| 0 - 5 | retarder |
| 0 - 5 | accelerator |
| 0 - 3 | thickener |
| 0 - 5 | foam binding agent |

3. External building board according to claim 1 or 2,
**characterised in that** the reinforcing fabric is embedded from an endless strip in a practically tension-free state.

4. External building board according to claim 3,
**characterised in that** the reinforcing fabric (22, 24) is a glass fibre fabric or fleece, an aramid or polyester fleece.

5. External building board according to claim 1,
**characterised in that** the core layer is a rigid plastic foam panel (2).

6. External building board according to claims 1 to 5,
**characterised in that** the two flat sides of the rigid plastic foam panel (2) are coated.

7. External building board according to claims 1 to 6,
**characterised in that** the rigid plastic foam panel (2) is 10 to 100 mm thick.

## Revendications

1. Panneau de construction pour l'extérieur comprenant une couche d'âme centrale (21), constituée d'une plaque de mousse, et une couche de mortier armé (26, 27) appliquée sur au moins l'une des faces planes de l'âme, dans lequel la couche de mortier armé (26, 27) est constituée d'un mortier durci (23', 25') dans lequel est noyée une toile de renforcement (22, 24) et qui est préparé à partir d'une poudre composée de ciment et d'adjuvants en mélange avec une dispersion de matière plastique contenant un copolymère de butylacrylate et de styrène, **caractérisé en ce que** la composition du mortier (23', 25') avant sa prise est la suivante :
- 50 à 90 pourcent, en poids, de poudre composée de ciment ultrafin et d'adjuvants ultrafins,
- 10 à 50 pourcent, en poids, d'une dispersion de matière plastique, cette dispersion contenant au maximum 60 pourcent en poids d'eau et la matière plastique dispersée étant constituée pour 80 à 90 pourcent en poids d'un copolymère de butylacrylate et de styrène,
- mélange avec 0,5 à 2 pourcent d'une dispersion de paraffine à concentration de paraffine de 20 et 50 pourcent en poids par rapport à l'eau,
- et avec 1 à 15 pourcent en poids d'eau.

2. Panneau selon la revendication 1, **caractérisé en ce qu'**à la part de poudre du mortier (23', 25'), il est ajouté :
| Parts en volume : (pourcentage volumétrique) | Constituants : |
|---|---|
| 0 - 5 | Retardateur |
| 0 - 5 | Accélérateur de prise |
| 0 - 3 | Epaississant |
| 0 - 5 | Liant de mousse |

3. Panneau selon la revendication 1 ou 2, **caractérisé en ce que** la toile d'armature (22, 24) est débitée d'une bande sans fin et noyée quasiment sans tension dans le mortier.

4. Panneau selon la revendication 3, **caractérisé en ce que** la toile d'armature (22, 24) est un tissu tissé ou non tissé de fibres de verre ou un feutre de polyamide ou de polyester.

5. Panneau selon la revendication 1, **caractérisé en ce que** l'âme est une plaque de mousse synthétique rigide (2).

6. Panneau selon l'une quelconque des revendications 1 à 5, **caractérisé en ce que** les faces planes de la plaque de mousse rigide (2) sont revêtues.

7. Panneau selon l'une quelconque des revendications 1 à 6, **caractérisé en ce que** l'épaisseur de la plaque de mousse rigide (2) est comprise entre 10 et 100 mm.
